# EUROPEAN PATENT SPECIFICATION

(11) **EP 0 989 799 B1**
(45) Date of publication and mention of the grant of the patent: **23.11.2005**
(21) Application number: 98932271.4
(22) Date of filing: 17.06.1998
(51) Int. Cl.: A01C 23/04, C05G 3/00, C05G 3/04

(54) **IRRIGATION METHOD**
BEWÄSSERNVERFAHREN
PROCEDE D'IRRIGATION

(30) Priority: 18.06.1997 US 50032 P
(43) Date of publication of application: 05.04.2000
(73) Proprietor: Ciba Specialty Chemicals Water Treatments Limited, Bradford, West Yorkshire BD12 0JZ (GB)
(72) Inventor: COLE, Richard, Everett, Oakdale, CA 95361 (US)
(86) International application number: PCT/GB1998/001763
(87) International publication number: WO 1998/057531

(56) References cited:
- EP-A- 0 186 721
- EP-A- 0 375 615
- WO-A-97/07675
- US-A- 4 277 026
- US-A- 4 424 302
- US-A- 4 797 145
- US-A- 5 580 168

## Description

This invention relates to the irrigation of large crop areas by spraying water onto the crop area.

### Background to the invention

It is common practice to irrigate crop areas in those regions where there is a shortage of rainfall. One method of irrigation is by furrow irrigation. A problem with furrow irrigation is that the irrigation water flowing along the furrow is liable to erode the furrow Also infiltration of the water through the furrow may not be as efficient as is desired. It is known to include synthetic polymer in the furrow irrigation water, the polymer often being the type which is commercially available for improving the structure of soil by direct application of the polymer to the soil. Furrow irrigation processes using such polymers are described particularly in W096/02126.

Another way of irrigating crop areas is by spraying water onto the area. Because there is no deliberate flow of water along the surface, it might be thought that erosion would not be a problem. However erosion problems can occur, especially when the irrigated area is on a slope.

Also infiltration may not be as efficient as is desirable, especially when the irrigated soil is allowed to dry out between irrigations, for instance as is likely to occur in large pivot irrigation systems where there may be a day or more between irrigations. Also not all the spray water is effective for irrigation, for instance due to run-off or evaporation.

It would be desirable to be able to minimise these deficiencies in large-scale spray irrigation.

It might be thought that introduction of polymers, for instance of the type known as soil conditioners, into the irrigation water would be beneficial. Unfortunately existing methods are not practicable.

US 4797145 is directed to methods for the improvement of agricultural soils and in particular the improvement in undesirable physical properties of agricultural soils from which water or wind erosion or surface crusting, compaction, excess water from rainfall or irrigation, lack of aeration can occur. There is disclosure of a method in which water-soluble agricultural polymers and a polysaccharide are incorporated in the irrigation water. The agricultural polymers comprise water-soluble poly electrolytes having an average molecular weight of at least about 15,000. The polyelectrolytes and polysaccharides are placed into solution at the concentrations used and suggests that a stock solution of 3000 ppm of polymers can be prepared and the stock solution is then diluted a hundred fold in a sprinkler system. Therefore, this disclosure relies upon using a preformed aqueous solution of polymer.

Various pieces of equipment are known for the distribution of agricultural chemicals onto crop areas. For instance, US 4277026 relates to a liquid chemical spraying apparatus for treating a field crop with liquid chemical for use with a water irrigation system. The liquid chemical may be a fertiliser, an insecticide, a fungicide, a herbicide, a miticide or other known chemical treatment additive. However, this reference does not deal with the problems that can occur when irrigation water flows over soil surface.

The delivery of agricultural chemicals by irrigation methods is also well-documented. For instance, WO 97/07675 relates to the sustained release of agricultural active ingredients and is concerned with providing a system for the sustained release of specialised trace agricultural active ingredients having a higher loading of active ingredients and which is relatively easy and cheap to make. An irrigation process is described in which water is contacted with a composition which releases agricultural active into the water and then applying this water to the plants or a substrate in which the plants are grown. The composition comprises a solid matrix of a water-soluble wax containing the active ingredients dispersed therein and an erosion inhibiting amount of particles of a water-soluble gel blocking synthetic polymer. The method involves flowing the irrigation water over the composition which is for instance placed adjacent to the plants, on a substrate or in furrows and states that in spray irrigation the composition is sited as a block at a convenient location in the water supply. Therefore, even when the block is sited in the water supply, the presence of the water-soluble polymer will be insignificant and insufficient to be effective at dealing with the problem of erosion and inefficient infiltration.

Polymers are generally supplied initially as a powder or as a reverse phase emulsion (i.e. a dispersion of polymer particles in a non-aqueous liquid, generally oil).

The normal industrial practice is to mix the powder or the reverse phase emulsion with water in special dissolution apparatus so as to form an aqueous solution of the polymer having a concentration of, for instance, 0.2 to 2% by weight and this solution is then dosed into the water which is to be treated by the polymer.

However the manufacture of this solution necessitates the provision of special make-up apparatus. It is impracticable to provide this make-up apparatus at the crop area, and if the solution is made up at a point distant from the crop area it is then necessary to transport the solution to the crop area and this is inconvenient because of the large volume of the solution.

### Summary of the invention

The invention provides a method of irrigating a large crop area by pumping water through feed ducting and a mixing zone to a spray manifold supplying one or more spraying devices by which the water is sprayed onto the crop area, characterised in that a substantially stable dispersion in a liquid of water soluble polymer particles is metered at a predetermined rate of 0.5 to 50ppm into the water at or before the mixing zone and the polymer particles are substantially completely dissolved into the water before the water is sprayed from the spraying devices.

The crop area is normally at least 1,000 m (0.1 hectare ha) but can be at least 1 ha or more and even up to 100 ha.

### Description of the preferred embodiments

The invention is intended to be applied to methods in which a large crop area is irrigated by a single spray apparatus. This is important because the invention relies in part on the high rate of flow of the water to the spray apparatus, and this high rate of flow is necessarily associated with a single spray apparatus being used to spray a relatively large crop area.

The polymer dispersion can be mixed into the water supply at any convenient point as the water flows through feed ducting which leads eventually to the spray manifold. Thus the polymer can be added to the irrigation water at a point distant from the spray apparatus which is mounted in the crop area and which includes the spray manifold. However the dispersion is usually best added to the irrigation water at the spray apparatus which is mounted in the crop area. This spray apparatus typically comprises a housing, a water inlet to which feed ducting can be attached, the spray manifold and a water supply passage leading from the inlet to the spray manifold. In the invention, a mixing zone is provided in the water supply passage between the inlet and the manifold and the dispersion is preferably metered into this mixing zone or into the passage on the inlet side of the mixing zone.

The preferred type of spray apparatus is a pivot irrigation apparatus, in which one or more spraying devices extend from the spray manifold in the form of elongated arms that pivot slowly around the spraying apparatus. Typically each of these arms may have a length of, for instance, 100 to 500 metres or sometimes even more.

When the spraying device is an elongated spraying member which has a plurality of spray orifices distributed along its length (for instance as in a pivot irrigator) the spray orifices are usually relatively coarse, for instance having a diameter at least 2 or 3 mm and frequently as much as 5, 10 or even 15 mm or more. This is advantageous in the invention since it minimises the risk of blockage of the orifices by improperly dissolved polymer.

The irrigation apparatus can, instead, be a water gun, for instance where the spray apparatus has a manifold leading to a single water gun, or a plurality of water guns, that pivot about the apparatus. The high ejection pressure of water guns again minimises the risk of any blockage due to polymer.

In general, the invention is applicable to a wide variety of spraying irrigation systems including pivot irrigators, land wheels and water guns.

The area that each spraying apparatus irrigates by spraying may be as low as 500m² but is usually at least 1000m² (1 ha) and frequently 10⁴ to 10⁶m² or even more for very large pivot irrigators. The area can be for instance at least 10 ha, preferably at least 20 ha or even at least 50 ha and in some cases at least 70 ha. It can be up to 100 ha.

The water pressure in the mixing zone is usually at least 30psi and frequently at least 50psi. It is generally below 100psi. The rate of flow will depend on the area which is to be irrigated but is usually above 300 US gallons per minute and preferably above 600 US gallons per minute. This high throughput of relatively high pressure water makes it easy to generate very turbulent mixing conditions in the mixing zone so as to achieve rapid distribution of the dispersed polymer particles through the water, and rapid dissolution of the particles into water. Often there is a filter between the water inlet to the spray apparatus and the spray manifold. This filter may cause sufficient mixing, in which event the polymer should be fed into the water between the inlet and the filter, the region from the point of addition of the polymer to the spray manifold then being the mixing zone.

If the filter or other equipment which is in the apparatus anyway does not give sufficient turbulence to achieve adequate mixing, then additional baffles can be fixed within the feed passage so as to promote the turbulence and thus promote the mixing and dissolution of the polymer into water.

The polymer dispersion can be a conventional reverse phase emulsion of the relevant polymer, namely a reverse phase emulsion of aqueous polymer particles dispersed (often below 10µm in size) in a non-aqueous liquid. Typically this emulsion contains 20 to 40% water (in the polymer particles), 20 to 40% polymer (dry weight) and 20 to 40% by weight of the non-aqueous liquid. This non-aqueous liquid can be a hydrocarbon or other hydrophobic liquid. Preferably, however, the dispersion is a reverse phase emulsion of substantially anhydrous particles of the polymer dispersed in the non-aqueous liquid. Such dispersions typically contain 35 to 65% by weight polymer and 35 to 65% by weight non-aqueous liquid and 0 to 15%, often 0 to 10%, by weight water.

Irrespective of whether the dispersion is anhydrous or aqueous, these dispersions in non-aqueous liquid preferably include an oil-in-water emulsifier in order to promote the emulsification into the irrigation water of the oil phase, so as to facilitate dissolution of the polymer particles into the water. Inclusion of such emulsifiers in reverse phase emulsions is known for promoting the dissolution of polymer when using special make-up apparatus, and any of the emulsifiers known for this purpose can be used.

Instead of using a dispersion in a non-aqueous liquid, it can be particularly preferred to use a dispersion of the polymer particles in an aqueous liquid. Since water soluble polymer particles are soluble in water, the aqueous phase of this dispersion has to contain a solubilisation inhibitor. This solubilisation inhibitor must be concentration-dependent, in order that it inhibits dissolution of the polymer particles into the aqueous phase when the aqueous phase has a high concentration of the solubilisation inhibitor, but permits dissolution of the polymer particles into water when the concentration of the solubilisation inhibitor is significantly reduced, i.e. when the dispersion is mixed into the irrigation water.

The concentration-dependent solubilisation inhibitor may consist of a single material or a mixture of materials. It is particularly preferred that part at least of the inhibitor should be a fertiliser, since this results in the irrigation water supplying both irrigation and fertilisation. The dissolution of many of the relevant polymers is inhibited by the presence of an electrolyte as part or all of the solubilisation inhibitor and so preferably an electrolyte which is a fertiliser is included in the aqueous phase of the stable dispersion. For instance the aqueous phase may include ammonium sulphate. Other ammonium, phosphate and/or potassium salts can also be used as electrolyte fertiliser components.

Instead of or in addition to using inorganic electrolyte as part or all of the solubilisation inhibitor, various polymeric materials can be used. They may be nonionic or ionic. For instance the dispersion can be made by the techniques, and using the materials, described in US 4,380,600 of Hosoda et al.

Such dispersions have a microscopic particle size, generally below 30µm and preferably below 10µm. It is also possible in the invention to use coarser particle sizes (at least as starting material), provided the dispersion remains sufficiently stable to be used in the invention. By this we mean that the dispersion does not settle out unacceptably (such that it cannot easily be redispersed by simple stirring), during transport and storage. Accordingly, particularly preferred compositions are compositions made by dispersing the chosen polymer particles into an aqueous solution of a polymer, optionally or preferably containing fertiliser electrolyte or other salt, for instance as described in EP-A-0169674 and of Farrar et al, assigned to Allied Colloids Limited.

The disclosure of the all the aforementioned US and European patent specifications is incorporated herein by reference.

Naturally any polymer which is utilised as part or all of the solubilisation inhibitor must be a polymer which does not interfere with the beneficial performance of the particulate polymer.

A preferred way of providing the substantially stable dispersion is by mixing, often with milling, polymer fines having a particle size generally below 200µm into an aqueous solution of the solubilisation inhibitor.

The particulate polymer which is milled into the aqueous phase or is otherwise provided as a dispersion in a liquid phase can be any water soluble polymer which will provide beneficial results when sprayed onto the crop area. Usually it is a synthetic polymer made by polymerisation of water soluble ethylenically unsaturated monomer or monomer blend. The monomers may be selected from non-ionic, anionic and cationic monomers. Intrinsic viscosity (measured by a suspended level viscometer at 20°C in 1 N sodium chloride buffered to pH 7) is usually at least 2 and preferably at least 4 dl/g. Often it is at least 8 or 10 dl/g, for instance up to 30 dl/g or even more in some instances.

Although the polymer can be cationic (provided it is toxicologically acceptable) the preferred polymers are usually non-ionic or anionic and thus are generally made from 0 to 70% by weight anionic monomer and 100 to 30% by weight non-ionic monomer. The non-ionic monomer is usually acrylamide but any other toxicologically acceptable ethylenically unsaturated, water soluble, non-ionic monomer can be used. The anionic monomer is usually an ethylenically unsaturated carboxylic or sulphonic monomer (often as the sodium salt) and most usually is sodium acrylate. Preferred polymers are formed by 10 to 50% by weight sodium acrylate with the balance being acrylamide.

It is important in the invention that the substantially stable dispersion should be metered at a predetermined rate into the mixing zone. Merely dribbling it into the water supply without careful control is not acceptable and, instead, accurate metering of the polymer is required so as to ensure both cost effective and approved application and the desired beneficial results of this, without incurring disadvantages due to accidental underdosing or overdosing.

Because of the high flow rate and high pressure of the water supply and the very low dosage that is required, it is necessary to use metering pump apparatus that is constructed to be suitable for achieving this very low controlled dosage into a high pressure high volume stream of water. Suitable apparatus is available from Prominent Fluids Controls Inc of Pitsburgh and includes the ProMinent (trade mark) gamma G/5a associated with appropriate pressure release valve systems and other conventional means for feeding the required low amount of polymer dispersion into the water.

The amount of polymer is usually at least about 0.5ppm (parts dry weight polymer per million parts by weight water) and usually at least 1ppm. It is not usually necessary for it to be above about 10 or 20ppm although in some instances it may be up to 30 or even 50ppm, depending upon the soil conditions and the duration of irrigation and the duration of polymer application.

Sometimes the polymer is dosed into the irrigation water substantially continuously. However an advantage of the invention is that the dosage can, if desired, be conducted intermittently, either in response to manual control or in response to automatic timer control. For instance, in pivot irrigation, the polymer can be dosed continuously but preferably is dosed for, for instance, one or two substantially complete rotations of the spray arms and then discontinued for, for instance, one to ten rotations before it is resumed again.

The inclusion of the proposed low dosage of the polymer in the spray water can have dramatic effects on performance. It not only eliminates capping or other surface sealing effects and increased water infiltration but also reduces run-off and erosion when the sprayed area is on an incline, and reduces loss of spray due to evaporation and drift.

The following is an example of the invention.

A potato field of a highly crustable clay was freshly tilled. In accordance with conventional practice, small dams were created in the bottoms of the potato furrows to help prevent run-off of irrigation water. The field was to be irrigated using a pivot irrigator using a 150 acre circle in 18 hours using 850 gallons per minute irrigation water.

When this had been done in previous years, there had been significant crusting and water run-off.

In the invention, an anhydrous dispersion of 50% anionic polyacrylamide in 50% oil (available from Allied Colloids Inc under the trade name Soilfix) was dosed initially at 15 ppm using a low dose diaphragm pump against 60 psi water pressure.

The pump was left to run for 18 hours, i.e. for one entire circle of the pivot. Irrigation was then discontinued and then five days later irrigation was conducted for 18 hours using 5 ppm polymer addition. This was repeated 4 days later. 4 days after that there was 18 hours irrigation without polymer, 6 days later there was 18 hours irrigation with 5ppm polymer and 5 and 10 days later there was irrigation without polymer.

It was observed that there was far less crusting and water run-off than in previous years, water infiltration was improved and there was increased crop vigour.

## Claims

1. A method of irrigating a crop area of at least 1000m² by pumping water through feed ducting and a mixing zone to a spray manifold supplying one or more spraying devices by which the water is sprayed onto the crop area, **characterised in that** a substantially stable dispersion in a liquid of water soluble polymer particles is metered at a predetermined rate of 0.5 to 50ppm into the water at or before the mixing zone and the polymer particles are substantially dissolved into the water before the water is sprayed from the spraying devices.

2. A method according to claim 1 in which the substantially stable dispersion is a reverse phase emulsion of aqueous particles of polymer dispersed in a non-aqueous liquid.

3. A method according to claim 1 in which the substantially stable dispersion is a reverse phase emulsion of substantially anhydrous particles of polymer dispersed in a non-aqueous liquid.

4. A method according to claim 1 in which the substantially stable dispersion is a dispersion of polymer particles in an aqueous phase containing a concentration dependent solubilisation inhibitor.

5. A method according to claim 4 in which the solubilisation inhibitor includes an electrolyte which is a fertiliser.

6. A method according to claim 4 in which the solubilisation inhibitor includes ammonium sulphate.

7. A method according to claim 1 in which the polymer is a synthetic polymer having intrinsic viscosity at least 4 dl/g formed from water soluble ethylenically unsaturated monomer or monomer blend.

8. A method according to claim 7 in which the polymer is formed from 100 to 30% by weight acrylamide and 0 to 70% by weight ethylenically unsaturated anionic monomer.

9. A method according to claim 1 in which the or each spraying device comprises an elongate spray member each of which has a plurality of spray orifices distributed along its length and the spray orifices have a diameter of at least 3 mm.

10. A method according to claim 1 conducted using a spray apparatus comprising a housing, a water inlet to which water feed ducting can be attached, the spray manifold, the mixing zone, and a water supply passage leading from the inlet through the mixing zone to the manifold.

11. A method according to claim 10 in which there is a filter in the passage and the dispersion is metered into the passage on the inlet side of the filter.

12. A method according to claim 1 conducted using a pivot irrigator.

13. A method according to claim 1 in which the crop area is at least 50,000 m².

## Patentansprüche

1. Verfahren zum Bewässern einer Kulturfläche von mindestens 1000 m² durch Pumpen von Wasser durch eine Versorgungsleitung und eine Mischzone zu einem Sprühleitungssystem, das eine oder mehrere Sprühvorrichtungen versorgt, durch die das Wasser auf die Kulturfläche versprüht wird, **dadurch gekennzeichnet, dass** eine im Wesentlichen stabile Dispersion in einer Flüssigkeit von in Wasser löslichen Polymerteilchen bei einer vorbestimmten Rate von 0,5 bis 50 ppm zu dem Wasser bei oder vor der Mischzone dosiert wird und die Polymerteilchen im Wesentlichen in dem Wasser gelöst sind, bevor das Wasser aus den Sprühvorrichtungen versprüht wird.

2. Verfahren nach Anspruch 1, wobei die im Wesentlichen stabile Dispersion eine Umkehrphasenemulsion von wässrigen Teilchen von in einer nicht wässrigen Flüssigkeit dispergiertem Polymer darstellt.

3. Verfahren nach Anspruch 1, wobei die im Wesentlichen stabile Dispersion eine Umkehrphasenemulsion von im Wesentlichen wasserfreien Teilchen von in einer nicht wässrigen Flüssigkeit dispergiertem Polymer darstellt.

4. Verfahren nach Anspruch 1, wobei die im Wesentlichen stabile Dispersion eine Dispersion von Polymerteilchen in einer wässrigen Phase, die einen konzentrationsabhängigen Solubilisierungsinhibitor enthält, darstellt.

5. Verfahren nach Anspruch 4, wobei der Solubilisierungsinhibitor einen Elektrolyt einschließt, der ein Düngemittel ist.

6. Verfahren nach Anspruch 4, wobei der Solubilisierungsinhibitor Ammoniumsulfat einschließt.

7. Verfahren nach Anspruch 1, wobei das Polymer ein synthetisches Polymer mit einer Grenzviskosität von mindestens 4 dl/g, gebildet aus in Wasser löslichem ethylenisch ungesättigtem Monomer oder Monomerblend, darstellt.

8. Verfahren nach Anspruch 7, wobei das Polymer aus 100 bis 30 Gew.-% Acrylamid und 0 bis 70 Gew.-% ethylenisch ungesättigtem anionischem Monomer gebildet wird.

9. Verfahren nach Anspruch 1, wobei die oder jede Sprühvorrichtung ein längliches Sprühelement umfasst, wobei jedes davon eine Vielzahl von Sprühöffnungen aufweist, die entlang seiner Länge verteilt sind, und die Sprühöffnungen einen Durchmesser von mindestens 3 mm aufweisen.

10. Verfahren nach Anspruch 1, das unter Verwendung einer Sprühapparatur durchgeführt wird, die ein Gehäuse, einen Wassereinlass, an den eine Wasserversorgungsleitung angeschlossen werden kann, das Sprühleitungssystem, die Mischzone und einen Wasserzuführungsdurchgang, der von dem Einlass durch die Mischzone zu dem Leitungssystem führt, umfasst.

11. Verfahren nach Anspruch 10, wobei es einen Filter in dem Durchgang gibt und die Dispersion in den Durchgang auf der Einlassseite des Filters dosiert wird.

12. Verfahren nach Anspruch 1, das unter Verwendung eines Schwenkregners durchgeführt wird.

13. Verfahren nach Anspruch 1, wobei die Kulturfläche mindestens 50000 m² ist.

## Revendications

1. Procédé d'irrigation d'une aire de culture d'au moins 1000 m² consistant à pomper de l'eau à travers une tuyauterie d'alimentation et une zone de mélange jusqu'à un distributeur de pulvérisation alimentant un ou plusieurs dispositifs de pulvérisation par lesquels l'eau est pulvérisée sur l'aire de culture, **caractérisé en ce qu'**une dispersion essentiellement stable dans un liquide composé de particules de polymère hydrosolubles est dosée à un débit prédéterminé de 0,5 à 50 ppm dans l'eau au niveau ou en amont de la zone de mélange et les particules de polymère sont essentiellement dissoutes dans l'eau avant que l'eau soit pulvérisée à partir des dispositifs de pulvérisation.

2. Procédé selon la revendication 1, dans lequel la dispersion essentiellement stable est une émulsion à phases inverses de particules de polymère aqueuses dispersées dans un liquide non aqueux.

3. Procédé selon la revendication 1, dans lequel la dispersion essentiellement stable est une émulsion à phases inverses de particules de polymère essentiellement anhydres dispersées dans un liquide non aqueux.

4. Procédé selon la revendication 1, dans lequel la dispersion essentiellement stable est une dispersion de particules de polymère dans une phase aqueuse contenant un inhibiteur de solubilisation dépendant de la concentration.

5. Procédé selon la revendication 4, dans lequel l'inhibiteur de solubilisation comprend un électrolyte qui est un fertilisant.

6. Procédé selon la revendication 4, dans lequel l'inhibiteur de solubilisation comprend du sulfate d'ammonium.

7. Procédé selon la revendication 1, dans lequel le polymère est un polymère synthétique ayant une viscosité intrinsèque d'au moins 4 dl/g, constitué d'un monomère éthylénique insaturé hydrosoluble ou d'un mélange de monomères.

8. Procédé selon la revendication 7, dans lequel le polymère est constitué de 100 à 30 % en poids d'acrylamide et de 0 à 70 % en poids de monomère éthylénique insaturé anionique.

9. Procédé selon la revendication 1, dans lequel le ou chaque dispositif de pulvérisation comprend un élément de pulvérisation allongé, dont chacun a une pluralité d'orifices de pulvérisation répartis sur sa longueur, et les orifices de pulvérisation ont un diamètre d'au moins 3 mm.

10. Procédé selon la revendication 1, mis en oeuvre en utilisant un appareil de pulvérisation comprenant un logement, une arrivée d'eau à laquelle une tuyauterie d'alimentation en eau peut être raccordée, le distributeur de pulvérisation, la zone de mélange et un passage d'approvisionnement en eau allant de l'arrivée au distributeur en passant par la zone de mélange.

11. Procédé selon la revendication 10, dans lequel un filtre est placé dans le passage et la dispersion est dosée dans le passage sur le côté arrivée du filtre.

12. Procédé selon la revendication 1, mis en oeuvre en utilisant un irrigateur à pivot.

13. Procédé selon la revendication 1, dans lequel l'aire de culture couvre au moins 50 000 m².
